# EUROPEAN PATENT APPLICATION

(11) **EP 4 328 277 A1**
(43) Date of publication of application: **28.02.2024**
(21) Application number: 22306260.5
(22) Date of filing: 25.08.2022
(51) Int. Cl.: C09D 11/17, C09D 11/18

(54) **PLASMONIC INKS WITH VIVID COLORS**

(71) Applicant: Société BIC, 92110 Clichy (FR); Université de Haute-Alsace, 68200 Mulhouse (FR); Centre national de la recherche scientifique, 75016 Paris (FR)
(72) Inventor: CAFFIER, Guillaume, 92110 Clichy (FR); GHELLAL, Feriel, 92110 Clichy (FR); MOUGIN, Karine, 68210 Valdieu-Lutran (FR); SPANGENBERG, Arnaud, 68720 Flaxlanden (FR)
(74) Representative: Peterreins Schley

(57) **Abstract**

The present application relates to a writing instrument comprising a writing tip and an ink reservoir connected to the writing tip, wherein the ink reservoir is sized to contain at least 100 µl of ink and contains an aqueous gel ink, comprising metal nanoparticles as coloring agent, wherein said metal nanoparticles essentially consist of metal and said metal is chosen from silver, gold, aluminum and/or copper, and a dispersing agent; wherein metal nanoparticles are contained within the aqueous gel ink in an amount of 0.5 - 2.5 wt.-%, relative to the total weight of the ink; and wherein the writing instrument is configured to dispense 150 - 800 mg/100m.

## Description

### Technical Field

The present disclosure relates to the field of writing instruments. More specifically, the present disclosure relates to writing instruments comprising plasmonic inks.

### Background

Writing instruments such as ballpoint pens comprise inks to produce images, texts or designs. The inks typically comprise pigments or dyes as colorant. However, the production of pigments and dyes, as well as inadequate disposal of dyes and pigments may be harmful to the environment. Very recently plasmonic nanoparticles have emerged as an alternative colorant for writing instrument inks.

Inks comprising plasmonic nanoparticles may be referred to as plasmonic ink compositions. The color of aqueous plasmonic ink compositions may be controlled by adjusting the particle size of the plasmonic nanoparticles. For example, a first ink comprising gold nanoparticles of smaller particle size may show a color closer to blue compared to a second ink comprising gold nanoparticles of a greater particle size, which may show a color closer to red.

However, the vividness and color saturation of a written plasmonic ink is sometimes undesirably low. While it may be possible to improve the vividness or fullness of the written plasmonic ink by increasing the concentration of the nanoparticles in the ink, concentrating the plasmonic nanoparticles after preparation without agglomeration can be difficult and expensive. Therefore, it may be quite difficult to obtain plasmonic inks which provide a vivid and full color impression in a commercially viable product.

The present disclosure aims to address the aforementioned issues in aqueous plasmonic ink compositions.

### Summary

The present inventors have found that the metal nanoparticles of plasmonic ink solutions can be relatively cost-effectively concentrated without detrimental agglomeration in the presence of a suitable dispersing agent to sufficiently high concentrations such that at least in very high laydown writing instruments very vivid and saturated written markings can be obtained. The inks are cost-effective to produce and stable since the nanoparticles are relatively moderately concentrated at amounts of 0.5 - 2.5 wt.-%, relative to the total weight of the ink. At these concentrations, vivid color and saturated color impressions of the written ink can be obtained when using the ink in a high laydown writing instrument, with best results obtained at laydowns of about 300 mg/100m or more. Thus, the combination of moderately concentrated and stable ink with a sufficiently high laydown writing instrument allows to cost-effectively write in vivid and saturated colors.

Accordingly, in a first aspect, the present disclosure relates to a writing instrument comprising a writing tip and an ink reservoir connected to the writing tip, wherein the ink reservoir is sized to contain at least 100 µl of ink. The ink reservoir contains an aqueous gel ink, comprising metal nanoparticles as a coloring agent. The metal nanoparticles essentially consist or consist of metal. The metal is chosen from silver, gold, aluminum and/or copper. The metal nanoparticles are contained within the aqueous gel ink in an amount of 0.5 - 2.5 wt.-%, relative to the total weight of the ink. The writing ink further comprises a dispersing agent, such as homopolymer or copolymer of vinylpyrrolidone and/or homopolymer or copolymer of vinyl alcohol, and mixtures thereof. The writing instrument is further configured to dispense 150 - 800 mg/100m, specifically 200 - 700 mg/100m, more specifically 250 - 600 mg/100m and in particular 250-500 mg/100m.

In some embodiments, the aqueous gel ink comprises the metal nanoparticles as the only coloring agent.

In some embodiments, the metal of the metal nanoparticles comprises silver, gold or a mixture thereof. In some embodiments, it may be particularly advantageous that the metal nanoparticles are silver nanoparticles.

In some embodiments, the aqueous gel ink composition exhibits a plasmonic effect.

In some embodiments, the metal nanoparticles are contained within the aqueous gel ink in an amount of 0.6 - 2.0 wt.-%, more specifically from 0.65 to 1.5 wt.-%, and in particular more specifically from 0.7 to 1.4 wt.-%, relative to the total weight of the ink.

In some embodiments, the metal nanoparticles of the aqueous gel ink have an average particle size ranging from 1 to 200 nm, specifically from 2 to 100 nm, more specifically from 5 to 100 nm.

In some embodiments, the dispersing agent comprises homopolymers or copolymers of vinylpyrrolidone and/or homopolymers or copolymers of vinyl alcohol, and mixtures thereof, more specifically homopolymers or copolymers of vinylpyrrolidone.

In some embodiments, the aqueous gel ink further comprises an ionic dispersing agent, more specifically a negatively charged ionic dispersing agent, and in particular an alkali metal or alkaline earth metal salt of citrate, such as sodium citrate.

In some embodiments, the amount of dispersing agent is ranging from 0.01 to 10 weight%, more specifically ranging from 0.01 to 5 weight %, more specifically 0.05 to 1 wt.-%, and in particular 0.1 to 0.5 wt.-%, based on the total weight of the aqueous gel ink.

In some embodiments, the aqueous gel ink further comprises one or more reducing agents and/or its residuals, more specifically one or more reducing agents and/or its residuals selected from:
ascorbic acid and its salts;
hydrides, specifically alkali metal hydrides, in particular sodium borohydride NaBH₄;
oxalic acid and its salts;
formic acid and its salts;
formaldehyde;
hydroxylamine (NH₂OH);
hydrazine and substituted hydrazines, in particular 1,1-dimethylhydrazine or 1,2-dimethylhydrazine;
hydrosulfite salts, in particular sodium hydrosulfite;
trialkylstannane, in particular tributylstannane,
tributyltin hydride,
phosphines, in particular triphenylphosphine,
phosphites, in particular triphenylphosphite,
silanes, in particular trichlorosilane, triethylsilane, tris(trimethylsilyl)silane and/or polymethylhydroxylisane,
esters of retinol of formula (I): 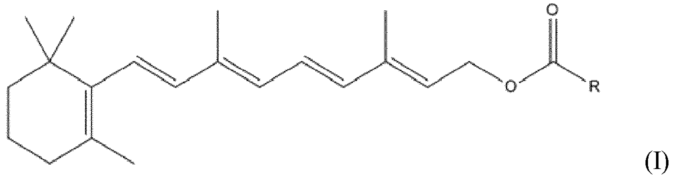
wherein R is an optionally substituted C₁-C₆ aliphatic group, more specifically a (C₁-C₆)alkyl group;
esters, amides and thioesters of citric acid and salts and solvates thereof;
N-acyl-aminophenol, wherein said hydroxyl group is in particular in meta or in para position on the benzenic group, preferably in para position, preferably an N-acyl-aminophenol of formula HO-R₁-NH-CO-R₂ wherein R₁ is a benzene ring and R₂ is an alkyl group comprising preferably from 1 to 6 carbon atoms, preferably from 1 to 3 carbon atoms, preferably the hydroxyl group is preferably in meta or in para position, preferably in para position;
and in particular wherein the reducing agent comprises sodium borohydride and/or ascorbic acid.

In some embodiments, the reducing agent comprises ascorbic acid. In other embodiments the reducing agent comprises sodium borohydride. Still in other embodiments the reducing agent comprises sodium borohydride and ascorbic acid.

In some embodiments, the aqueous gel ink further contains one or more of: a co-solvent, an antimicrobial agent, a corrosion inhibitor, an antifoam agent, and/or a rheology modifier.

In some embodiments, the aqueous gel ink is black or blue. In some embodiments, the aqueous gel ink has a fixed color.

In some embodiments, the aqueous gel ink comprises metal nanoparticles having a non-spherical shape, more specifically an asymmetric shape, and in particular a shape selected from platelets, rods, wires (in particular pentagonal, Y-shaped, K-shaped and multi-branched wires), bars, faceted near-spherical shapes, prisms, flower shapes, polyhedral shapes, triangular shapes, bipyramidal shapes, truncated triangular shapes, square shapes, rectangular shapes, hexagonal plates, urchins shapes or even irregular shapes. In some embodiments, it may be particularly advantageous that the aqueous gel ink comprises metal nanoparticles having an urchin shapes and/or a polyhedral shape.

In a second aspect, the present disclosure relates to a process for preparing aqueous gel ink comprising metal nanoparticles which essentially consist of metal and wherein said metal is selected from silver, gold, aluminum and/or copper, comprising the following steps:
(i) preparing a gel-based matrix for an aqueous gel ink;
(ii) preparing an aqueous suspension of metal nanoparticles, wherein said metal nanoparticles essentially consist of metal and said metal is selected from silver, gold, aluminum and/or copper, by mixing a metal salt, wherein the metal salt comprises silver ions, gold ions, aluminum ions and/or copper ions, with:
   - water,
   - one or more reducing agents,
   - and a dispersing agent, such as homopolymers or copolymers of vinylpyrrolidone and/or homopolymers or copolymers of vinyl alcohol, and mixtures thereof, more specifically homopolymers or copolymers of vinylpyrrolidone;
(iii) concentrating the aqueous suspension obtained in step (ii) by centrifugation and/or filtration; and
(iv) adding the concentrated aqueous suspension of nanoparticles obtained in step (iii) to the gel-based matrix obtained in step (i).

In some embodiments, in step (iii), the aqueous suspension is concentrated by nanofiltration, in particular wherein the aqueous suspension is retained by a porous polysulfone membrane.

In some embodiments, the one or more reducing agents is selected from:
ascorbic acid and its salts;
hydrides, specifically alkali metal hydrides, in particular sodium borohydride NaBH₄;
oxalic acid and its salts;
formic acid and its salts;
formaldehyde;
alkali metal salt or alkaline earth metal salt;
hydroxylamine (NH₂OH);
hydrazine and substituted hydrazines, in particular 1,1-dimethylhydrazine or 1,2-dimethylhydrazine;
hydrosulfite salts, in particular sodium hydrosulfite;
trialkylstannane, in particular tributylstannane,
tributyltin hydride,
phosphines, in particular triphenylphosphine,
phosphites, in particular triphenylphosphite,
silanes, in particular trichlorosilane, triethylsilane, tris(trimethylsilyl)silane and/or polymethylhydroxylisane,
esters of retinol of formula (I): 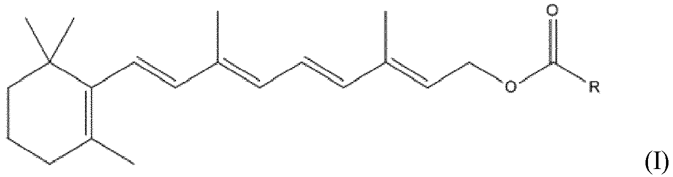
wherein R is an optionally substituted C₁-C₆ aliphatic group, more specifically a (C₁-C₆)alkyl group;
esters, amides and thioesters of citric acid and salts and solvates thereof; N-acyl-aminophenol, wherein said hydroxyl group is in particular in meta or in para position on the benzenic group, preferably in para position, preferably an N-acyl-aminophenol of formula HO-R₁-NH-CO-R₂ wherein R₁ is a benzene ring and R₂ is an alkyl group comprising preferably from 1 to 6 carbon atoms, preferably from 1 to 3 carbon atoms, preferably the hydroxyl group is preferably in meta or in para position, preferably in para position;
and in particular wherein the reducing agent comprises sodium borohydride and/or ascorbic acid.

In some embodiments, the aqueous suspension of step (ii) further comprises an ionic dispersing agent, more specifically a negatively charged ionic dispersing agent, and in particular an alkali metal or alkaline earth metal salt of citrate, such as sodium citrate.

In some embodiments, step (ii) comprises a step (ii-a) of mixing the metal salt with one or more reducing agents to prepare an aqueous suspension comprising nanoparticle seeds and a step (ii-b) of subsequently adding a further metal salt and one or more further reducing agents to the said aqueous suspension comprising nanoparticle seeds to obtain the metal nanoparticles. In some embodiments, said further metal salt is identical to the metal salt and wherein said one or more further reducing agents is the same as or different to the one or more reducing agents. In some embodiments, said one or more further reducing agents is selected from the list of reducing agents stated four paragraphs above. In some embodiments, the metal salt and said further metal salt are silver salts, in particular AgNO₃, and wherein the one or more reducing agents is NaBH₄ and said one or more further reducing agents is ascorbic acid. In some embodiments, the dispersing agent comprises homopolymers or copolymers of vinylpyrrolidone and/or homopolymers or copolymers of vinyl alcohol, and mixtures thereof, more specifically homopolymers or copolymers of vinylpyrrolidone, and is added in step (ii-b). In some embodiments, a ionic dispersing agent, more specifically a negatively charged ionic dispersing agent, and in particular an alkali metal or alkaline earth metal salt of citrate, such as sodium citrate, is added in step (ii-a) and/or in step (ii-b), in particular in both step (ii-a) and (ii-b).

In some embodiments, the total amount of said citrate salts added in step (ii) ranges from 0.001 to 0.08 wt.-%, more specifically from 0.005 to 0.06 wt.-%, and in particular from 0.01 to 0.04 wt.-%, based on the total weight of the aqueous suspension.

In some embodiments, the total amount of metal salt added in step (ii) ranges from 0.0005 to 0.006 wt.-%, more specifically from 0.001 to 0.005 wt.-%, and in particular from 0.0012 to 0.004 wt.-%, based on the total weight of the aqueous suspension.

In some embodiments, the total amount of alkali metal hydride added in step (ii) ranges from 0.00001 to 0.005 weight %, based on the total weight of the aqueous suspension.

In some embodiments, the total amount of dispersing agent(s) added in step (ii) ranges from 0.05 to 0.5 weight % based on the total weight of the aqueous suspension.

In some embodiments, the process according to the second aspect of the present disclosure results in an aqueous gel ink having one or more of the features recited for the aqueous gel ink according to the first aspect of the present disclosure.

### Brief Description of Figures

Figure 1 shows a representative example of a plasmonic ink according to the present disclosure.
Figure 2 shows the handwriting obtained in Example 1.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a writing instrument comprising a writing tip and an ink reservoir connected to the writing tip, wherein the ink reservoir is sized to contain at least 100 µl of ink. The ink reservoir contains an aqueous gel ink, comprising metal nanoparticles as coloring agent. The metal nanoparticles essentially consist or consist of metal. The metal is chosen from silver, gold, aluminum and/or copper. The metal nanoparticles are contained within the aqueous gel ink in an amount of 0.5 - 2.5 wt.-%, relative to the total weight of the ink. The writing ink further comprises a dispersing agent, such as homopolymer or copolymer of vinylpyrrolidone and/or homopolymer or copolymer of vinyl alcohol, and mixtures thereof.

The writing instrument is further configured to dispense 150 - 800 mg/100m, specifically 200 - 700 mg/100m, more specifically 250 - 600 mg/100m and in particular 250-500 mg/100m. The determination of the laydown is not particularly limited and can be done as indicated in the below experimental section.

The ink reservoir is sized to contain at least 100 µl of ink, for instance 100 µl to 20 ml, more specifically 150 µl to 5 ml, and in particular 200 µl to 2 ml, of ink.

In some embodiments, writing instrument may be selected from the group consisting of gel pens, felt pens, markers, and be specifically a gel pen.

In some embodiments, the writing tip of the writing instrument may comprise a ball point having a ball size of between about 0.6 mm and about 2 mm, in particular between about 0.7 mm and about 1.5 mm. In some embodiments, the writing tip may comprise a ball point comprising a ball rotably located within a writing orifice, wherein a gap between the writing orifice and the ball has a width has a width of between about 5 µm to about 30 µm, more specifically between about 5 µm to about 25 µm and in particular between about 10 µm to about 25 µm. A gap between the writing orifice and the ball of these sizes may be beneficial for providing the required high laydown but without causing undue static or dynamic leakage during storage or after writing.

The present disclosure relates to writing instruments comprising an aqueous gel ink, comprising metal nanoparticles as coloring agent.

For the purposes of the present disclosure, the term "ink" is intended to mean a "writing ink" which is intended to be used in a writing instrument, and in particular in a pen. A writing ink should not be confused with a "printing ink" which is used in printing machines and which does not have the same technical constraints and thus the same specifications. Indeed, a writing ink must not contain solid particles of which the size is greater than the channels of the writing instrument, in order to avoid blocking them, which would inevitably lead to writing being irreversibly stopped. In addition, it must allow an ink flow rate suitable for the writing instrument used. It must also dry sufficiently rapidly to avoid smudging the writing medium. It must also avoid the problems of migration (bleeding) over time. Thus, the ink according to the present invention will be suitable for the writing instrument for which it is intended, in particular for a pen.

In addition, a "writing ink" must not be too fluid, so as to avoid leaks during writing. However, it must be sufficiently fluid to facilitate the flow of the writing action. In the particular case of the present disclosure, the writing ink is more specifically a "gel ink" (which corresponds therefore to a thixotropic ink), in particular the viscosity measured at rest (at a shear rate of 0.01 s⁻¹) at 20°C is different and in particular higher than the viscosity measured with a shear rate of 100 s⁻¹ at 20°C using the same rheometer such as a cone-and-plate rheometer for example Malvern KINEXUS with a cone of 60 mm and an angle of 1°.

In a particular embodiment, the viscosity of the gel ink according to the present invention measured under these conditions ranges from 1,000 to 7,000 mPa.s, specifically from 2,000 to 5,000 mPa.s, and more specifically from 2,500 to 3,500 mPa.s, at rest (i.e. with a shear rate of 1 s⁻¹), and specifically from 5 to 50 mPa.s, more specifically from 7 to 40 mPa.s, and still more specifically from 10 to 20 mPa.s with a shear rate of 5,000 s⁻¹. Specifically, in some embodiments, said viscosity is stable during storage for at least three months at 40°C and 20% relative humidity, in particular the viscosity will not have a more than 50% decrease in said time period. More specifically, the return to viscosity at rest after shear may additionally be very quick, specifically at most a few (e.g. 1, 2, 3, 4 or 5) minutes, in order to avoid static leakage in the minutes after writing.

The ink may provide a plasmonic effect, i.e. be a plasmonic ink. The term "plasmonic ink" is well-known in the art and *i.a.* attributed its common meaning in the art. Additionally or alternatively, the term "plasmonic ink" may refer to an ink comprising plasmonic structures. Additionally or alternatively, the term "plasmonic ink" may refer to an ink comprising plasmonic nanoparticles, in particular plasmonic metal nanoparticles. The term "plasmonic (metal) nanoparticles" is well-known in the art and *i.a.* attributed its common meaning in the art. Additionally or alternatively, the term "plasmonic (metal) nanoparticles" may refer to particles, whose electron density can couple with electromagnetic radiation of wavelengths greater than the particle due to a dielectric-metal interface between the particles and the medium the particles are dispersed within. The coupling with electromagnetic radiation may be referred to as plasmonic effect. Additionally or alternatively, the term "plasmonic (metal) nanoparticles" may refer to particles configured to form plasmonic clusters with adjacent plasmonic nanoparticle(s). The coupling with adjacent plasmonic nanoparticles may result in plasmonic coupling. The plasmonic clusters may form a type of bonding or antibonding character between the plasmonic nanoparticles similar to molecules, in particular by the surface electrons of each particles collectively oscillating. Two (metal) nanoparticles may in particular form a plasmonic cluster if the distance between the (metal) nanoparticles is less than the diameter of a particle. Both the plasmonic effect, as well as the plasmonic coupling may influence the color of a plasmonic ink composition, in particular by changing the light absorption and light scattering characteristics. Further, both the plasmonic effect and plasmonic coupling depend on the particle size of the (metal) nanoparticle. The above-mentioned plasmonic effect can be characterized by UV (ultraviolet)-visible-NIR (near infra-red) absorption spectroscopy.

In the sense of the present disclosure, the term "metal nanoparticles consisting essentially of metal" is intended to mean that the main component of the nanoparticles is metal and in particular that other ingredients in the metal nanoparticles such as impurities, such as metal oxides (silver oxide, gold oxide, copper oxide, aluminum oxide) are only present in trace amount. More specifically the content of metal is of at least 95%, even more specifically of at least 98% by weight, relative to the total weight of nanoparticles. More specifically the content of impurities is lower than 5%, even more specifically lower than 2%, by weight, relative to the total weight of nanoparticles.

In some embodiments, the metal nanoparticles consist only of metal.

In some embodiments, the aqueous writing ink composition is essentially free or free of iron, in particular of iron powder.

In some embodiments, the aqueous gel ink comprises the metal nanoparticles as the only coloring agent.

In some embodiments, the metal of the metal nanoparticles comprises silver, gold or a mixture thereof. In some embodiments, it may be particularly advantageous that the metal nanoparticles are silver nanoparticles.

In some embodiments, the metal nanoparticles are contained within the aqueous gel ink in an amount of 0.6 - 2.0 wt.-%, more specifically from 0.65 to 1. wt.-%, and in particular more specifically from 0.7to 1.4 wt.-%, relative to the total weight of the ink.

In some embodiments, the metal nanoparticles of the aqueous gel ink have an average particle size ranging from 1 to 200 nm, specifically from 2 to 100 nm, more specifically from 5 to 100 nm. More specifically the longest dimension of the metal nanoparticles is ranging from 1 to 200 nm, even more specifically from 2 to 100 nm, still more specifically from 5 to 100 nm. More specifically all the dimensions of the metal nanoparticles are ranging from 1 to 200 nm, even more specifically from 2 to 100 nm, still more specifically from 5 to 100 nm. This average particle size and the dimension of the particles may be determined by analysis of 2D images (microscope: JEOL ARM 200), according to the standard ISO9001:2015.

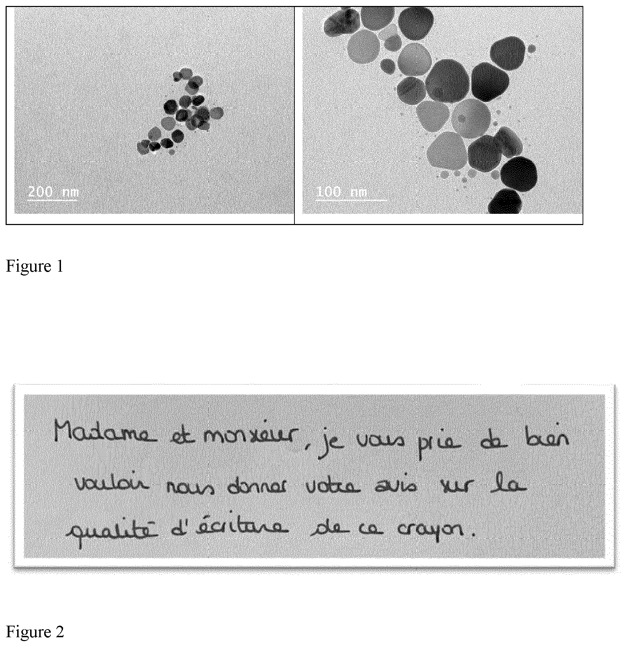

In some embodiments, the aqueous gel ink comprises metal nanoparticles having a non-spherical shape, more specifically an asymmetric shape, and in particular a shape selected from platelets, rods, wires (in particular pentagonal, Y-shaped, K-shaped and multi-branched wires), bars, faceted near-spherical shapes, prisms, flower shapes, polyhedral shapes, triangular shapes, bipyramidal shapes, truncated triangular shapes, square shapes, rectangular shapes, hexagonal plates, urchins shapes or even irregular shapes. In some embodiments, it may be particularly advantageous that the aqueous gel ink comprises metal nanoparticles having an urchin shapes and/or a polyhedral shape. Examples of the shapes of typical nanoparticles are shown in Fig. 1.

As said, the aqueous gel ink comprises a dispersing agent (which may also be called stabilizing agent). The type of dispersing agent is not particularly limited and suitable types include non-ionic and ionic dispersing agents. In some embodiments, the dispersing agent comprises a non-ionic dispersing agent. In some embodiments, the non-ionic dispersing agent may be configured to aggregate on the surface of the metal nanoparticles. In some embodiments, a non-ionic dispersing agent may have the weight-average molecular weight of above 5 kDa, specifically between 15 and 2000 kDa, more specifically between 30 and 500 kDa, even more specifically between 80 and 350 kDa. In some embodiments, the non-ionic dispersing agent may have one or more and in particular all of the aforementioned properties. The non-ionic dispersing agent may aggregate on the surface of the metal nanoparticles and sterically hinder the particles from agglomerating. Furthermore, without wishing to be bound by theory, the steric hindrance may be beneficial in providing a fixed color since it establishes a minimum distance between the nanoparticles.

In some embodiments, it may be particularly advantageous that the dispersing agent comprises a homopolymer or copolymer of vinylpyrrolidone and/or homopolymer or copolymer of vinyl alcohol, and mixtures thereof, more specifically homopolymer and/or copolymer of vinylpyrrolidone, even more specifically polyvinylpyrrolidone (PVP).

More specifically the homo and/or copolymer(s), in particular the homopolymer of vinylpyrrolidone may have a weight-average molecular weight of above 5 kDa, specifically between 15 and 2000 kDa, more specifically between 30 and 500 kDa, even more specifically between 80 and 350 kDa, such as PVP K30. More specifically the homo and/or copolymer(s), in particular the homopolymer of vinyl alcohol may have a weight-average molecular of above 20 kDa, specifically between 50 and 100 kDa, more specifically between 60 and 80 kDa.

In some embodiments, the aqueous gel ink (further) comprises an ionic dispersing agent, more specifically a negatively charged ionic dispersing agent. The ionic dispersing agent may act by aggregating on the surface of the metal nanoparticles which are then repulsed from each other.

In some embodiments, it may be particularly advantageous that the ionic dispersing agent is a salt of citric acid, in particular an alkali metal salt and/or alkaline earth metal salt of citrate, more specifically from an alkali citrate salt, in particular sodium citrate. The salts of citric acid, also known as citrate salts, may come with various levels (mono-, di-, tri-) of different metal cations such calcium, potassium or sodium, which are all encompassed by the present definition of a salt of citric acid. Specific salts of citric acid which may be used in the present disclosure also include aluminium citrate, calcium citrate, copper citrate, diammonium citrate, disodium citrate, cupric citrate, ferric citrate, magnesium citrate, manganese citrate, monosodium citrate, potassium citrate, sodium citrate, zinc citrate. Specifically, the salts of citric acid of the present invention are sodium citrate, potassium citrate, and diammonium citrate.

Without being bound by theory, the dispersing agent(s) may *i.a.* avoid the agglomeration and/or aggregation and/or sedimentation of the metal nanoparticles. Such agglomeration and/or aggregation and/or sedimentation may impede or prevent the formation of a plasmonic effect. As said above, it is further believed that the dispersing agent is facilitating the concentration of aqueous dispersions containing metal nanoparticles, in particular if the concentration is performed by centrifugation or filtration.

In some embodiments, the amount of dispersing agent is ranging from 0.01 to 10 weight%, more specifically ranging from 0.01 to 5 weight %, more specifically 0.05 to 1 wt.-%, and in particular 0.1 to 0.5 wt.-%, based on the total weight of the aqueous gel ink.

In some embodiments, the aqueous gel ink comprises a ionic dispersing agent having a molecular weight of from 100 to 2000 g/mol, more specifically from 150 to 1000 g/mol, and in particular from 200 to 600 g/mol; and advantageously a salt of citric acid, in particular an alkali metal salt and/or alkaline earth metal salt of citrate, more specifically from an alkali citrate salt, in particular sodium citrate; wherein the amount of said ionic dispersing agent is ranging from 0.02 to 2, more specifically 0.04 to 1, and in particular 0.08 to 0.6 µg/ml.

In some embodiments, the aqueous gel ink (further) comprises a ionic dispersing agent having the weight-average molecular weight of above 5 kDa, specifically between 15 and 2000 kDa, more specifically between 30 and 500 kDa, even more specifically between 80 and 350 kDa, in particular a homopolymer or copolymer of vinylpyrrolidone and/or homopolymer or copolymer of vinyl alcohol, and mixtures thereof, more specifically homopolymer and/or copolymer of vinylpyrrolidone, even more specifically polyvinylpyrrolidone (PVP), wherein the amount of said non-ionic dispersing agent is ranging from 0.2 to 10, more specifically 0. 8 to 6, and in particular 1 to 4 µg/ml.

0.01 to 10 weight%, more specifically ranging from 0.01 to 5 weight %, more specifically 0.05 to 1 wt.-%, and in particular 0.1 to 0.5 wt.-%, based on the total weight of the aqueous gel ink.

In some embodiments, the aqueous gel ink further comprises one or more reducing agents and/or its residuals, more specifically one or more reducing agents and/or its residuals selected from:
ascorbic acid and its salts, in particular its sodium and potassium salts;
hydrides, specifically alkali metal hydrides, in particular sodium borohydride NaBH₄;
oxalic acid and its salts, in particular its sodium and potassium salts;
formic acid and its salts, in particular its sodium and potassium salts;
formaldehyde;
hydroxylamine (NH₂OH);
hydrazine and substituted hydrazines, in particular 1,1-dimethylhydrazine or 1,2-dimethylhydrazine;
hydrosulfite salts, in particular sodium sodium hydrosulfite or sodium hydrosulfite;
trialkylstannane, in particular triethylstanne or tributylstannane,
tributyltin hydride,
phosphines, in particular trialkylphosphines or triphenylphosphine, phosphites, in particular trialkylphosphites or triphenylphosphite, silanes, in particular trichlorosilane, triethylsilane, tris(trimethylsilyl)silane and/or polymethylhydroxylisane,
esters of retinol of formula (I): 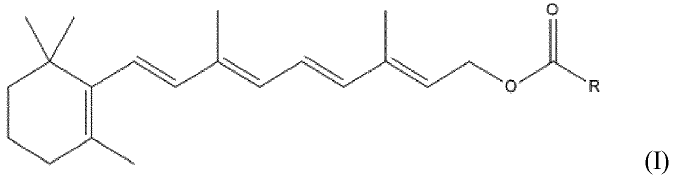
wherein R is an optionally substituted C₁-C₆ aliphatic group, more specifically a (C₁-C₆)alkyl group;
esters, amides and thioesters of citric acid and salts and solvates thereof; N-acyl-aminophenol, wherein said hydroxyl group is in particular in meta or in para position on the benzenic group, preferably in para position, preferably an N-acyl-aminophenol of formula HO-R₁-NH-CO-R₂ wherein R₁ is a benzene ring and R₂ is an alkyl group comprising preferably from 1 to 6 carbon atoms, preferably from 1 to 3 carbon atoms, preferably the hydroxyl group is preferably in meta or in para position, preferably in para position;
and in particular the reducing agent comprises sodium borohydride and/or ascorbic acid.

In some embodiments, in the ester (s) of retinol of above formula (I), R represents a C₁-C₆ aliphatic group, said aliphatic group being optionally substituted with at least one hydroxyl, halogen, amino, C₁-C₃ alkyl and/or C₁-C₃ alkoxy group, said aliphatic group being more specifically a C₁-C₆ alkyl group, still more specifically a C₁-C₄ alkyl group, in particular a methyl group, more particularly unsubstituted. The ester of retinol represented by the formula (I), wherein R represents a methyl group, is commonly known as retinyl acetate (CAS number: 127-47-9), also known as vitamin A acetate, which may be purchased via Sigma-Aldrich.

In some embodiments, the N-acyl-aminophenol is N-acetyl-para-aminophenol.

In some embodiments, in formula HO-R¹-NH-CO-R², R¹ is a benzene ring, R² is a methyl radical, and the hydroxyl group is in para position. The N-acetyl-para-aminophenol (CAS number: 103-90-2), also known as paracetamol or acetaminophen, may be purchased under different trade name such as Doliprane^{®}, Tylenol^{®}, Calpol^{®}, Panadol^{®}, Dafalgan^{®}, Efferalgan^{®}, etc.

In some embodiments, the alkali metal hydride may be selected among sodium borohydride (NaBH₄), sodium cyanoborohydride (NaBH3CN), sodium triacetoxy borohydride (NaHB(OAc)₃), sodium tri-sec-butylborohydride, potassium tri-sec-butylborohydride, potassium triethylborohydride, lithium triethylborohydride, lithium tri-sec-butylborohydride, nickel borohydride, lithium aluminate hydride, diisobutylaluminium hydride, sodium bis (2-methoxyethoxyaluminium hydride.

In some embodiments, the derivatives of citric acid may be chosen from esters, amides and thioesters of citric acid, salts of citric acid or of said derivatives, solvates of citric acid or of said derivatives, such as hydrates, and mixtures thereof. The suppliers of citric acid and/or derivatives are chosen among: Fluka^{™}, Sigma-Aldrich^{™}, TCI chemicals^{™}.

In some embodiments, the esters of citric acid are alkyl esters, preferably C₁₋₃₀ alkyl esters, specifically C₁₋₂₀ alkyl esters, and in particular C₁₋₆ alkyl esters. The esters of citric acid may be monoesters, diesters and/or triesters, specifically triesters of citric acid. The esters of citric acid may include isodecyl citrate, isopropyl citrate, stearyl citrate, dilauryl citrate, distearyl citrate, tributyl citrate, tricaprylyl citrate, triethyl citrate, triethylhexyl citrate, trihexyldecyle citrate, triisocetyl citrate, trilauryl citrate, trioctyldodecyl citrate, trioleyl citrate, triisostearyl citrate, tristearyl citrates, ethyl citrates, tri-C₁₂₋₁₅-alkyl citrate such as tributyl citrate or triethyl citrate, tricaprylyl citrate, triethylhexyl citrate, triisocetyl citrate, trioctyldodecyl citrate, triisostearyl citrate, isodecyl citrate, stearyl citrate, dilauryl citrate, and ethyl citrate. In some embodiments, the esters of citric acid of the present invention are tributyl citrate and triethyl citrate.

In some embodiments, the amides of citric acid may be prepared by the reaction of primary amines with citric acid. The amination reaction to form the amide may be performed using a variety of conditions well known in the organic chemical art as described in the Kirk-Othmer Encyclopedia of Chemical Technology, 4th Ed., Vol. 2, p. 348-351. One exemplary method involves the reaction of citric acid with 3 or more equivalents in a protic solvent. All primary amines or mixtures of primary amines containing preferably the requisite C₁ to C₁₈ alkyl substituents may be utilized for the preparation of the tri-alkylcitramides of this invention. The alkyl groups in the citramides may be the same or different and may be linear or branched. Examples of suitable alkyl groups are methyl, ethyl, *n*-propyl, *iso*propyl, *n*-butyl, *iso*-butyl, *sec*-butyl, *n*-pentyl, 2-pentyl, 3-pentyl, *iso*-pentyl, neopentyl, cyclopentyl, 2-methylbutyl, 3-methyl-2-butyl, *n*-hexyl, 2-hexyl, 3-hexyl, cyclohexyl, 2-ethylbutyl, 4-methyl-2-pentyl, *n*-heptyl, *n*-octyl, *n*-2-ethylhexyl, *n-*nonyl, *n*-decyl, *n*-undecyl, *n*-dodecyl. Specifically, the amides of citric acid may be tri-butyl citramide and triethyl citramide.

In some embodiments, the thioesters of citric acid may be prepared by the reaction of thiol and derivatives with citric acid. Several examples of thiols and derivatives can be used: allyl mercaptan, 2-aminoethanethiol, 2-aminobenzenethiol, 3-aminobenzenethiol, 4-aminobenzenethiol, 1,3-benzenedimethanethiol, 1,4-benzenedimethanethiol. Specifically, the thioester of citric acid may be obtained by reaction between an allyl mercaptan and citric acid.

In some embodiments, it may be particularly advantageous that the reducing agent of the aqueous gel ink is selected from:
- ascorbic acid;
- alkali metal hydride, specifically sodium borohydride NaBH₄;
- and a mixture thereof.

It should also be understood that the metal nanoparticles contained in the aqueous gel ink are preparable by chemically reducing metal ions. Therefore, in some embodiments, the reducing agent may already be (largely) consumed in the process of preparing the nanoparticles and that (mostly) residuals of the reducing agents, e.g. their oxidized forms or a products of further decomposition, are present. For example, an exemplary synthesis of nanoparticles may follow the following reaction scheme: 2 AgNO₃ + 2 NaBH₄ → 2 Ag (metal) + H₂ (gas) + B₂H₆ + 2 NaNO₃. The diborane (B₂H₆) may be considered as the residual of NaBH₄.

In some embodiments, the (total) amount of reducing agent(s) or its/their residuals in the aqueous gel ink ranges from 0.0000001 % to 0.5 % by weight, relative to the total weight of the aqueous gel ink.

In some embodiments, the aqueous gel ink further contains one or more of: a co-solvent, an antimicrobial agent, a corrosion inhibitor, an antifoam agent, and/or a rheology modifier. These components will be described below.

In some embodiments, the aqueous gel ink may comprise a co-solvent. Among the co-solvents that can be used, mention may be made of polar solvents miscible in water such as:
- glycol ethers such as triethylene glycol, polyethylene glycol, diethylene glycol monoethyl ether, diethylene-glycol-mono butyl ether, dipropyleneglycol monobutyl ether, tripropylene glycol monomethyl etherphenoxyethanol, phenoxypropanol,
- alcoholssuch as linear or branched alcohol in C₁-C₁₅ such as benzyl alcohol, glycerin, diglycerin, polyglycerin,
- esters such as ethyl acetate or propyl acetate,
- carbonate esters such as propylene carbonate or ethylene carbonate, and
- mixtures thereof.

In a specific embodiment, the co-solvent is chosen in the group consisting of glycol ethers, and more specifically is chosen in the group consisting of triethylene glycol, polyethylene glycol, diethylene glycol monoethyl ether, diethylene-glycol-mono butyl ether, dipropyleneglycol monobutyl ether, tripropylene glycol monomethyl ether, phenoxyethanol, phenoxypropanol, and mixture thereof. In a further specific embodiment the co-solvent is chosen in the group consisting of triethylene glycol, polyethylene glycol and mixture thereof.

In some embodiments, the total amount of the co-solvent in the aqueous gel ink ranges from 5 to 35%, more specifically from 9 to 30%, even more specifically from 11 to 25%, by weight relative to the total weight of the aqueous gel ink.

In some embodiments, the aqueous gel ink may comprise an antimicrobial agent such as isothiazolinone (ACTICIDE^{®} from Thor), specifically chosen in the group consisting of 1,2-benzisothiazolin-3-one, 2-methyl-4-isothiazolin-3-one, and mixture thereof.

Specifically, the total amount of the antimicrobial agent in the aqueous gel ink may range from 0.01 to 0.5%, more specifically from 0.1 to 0.2%, by weight relative to the total weight of the aqueous gel ink.

In some embodiments, the aqueous gel ink may comprise a corrosion inhibitor, specifically chosen in the group consisting of tolytriazole, benzotriazole, and mixture thereof.

Specifically, the total amount of the corrosion inhibitor in the aqueous gel ink may range from 0.05 to 1%, more specifically from 0.07 to 0.6%, even more specifically from 0.08 to 0.4%, by weight relative to the total weight of the aqueous gel ink.

In some embodiments, the aqueous gel ink may comprise an antifoam agent, specifically a polysiloxane-based antifoam agent, and more specifically an aqueous emulsion of modified polysiloxane (such as MOUSSEX^{®} from Synthron, TEGO^{®} Foamex from Evonik).

Specifically, the total amount of the antifoam agent in the aqueous gel ink may range from 0.05 to 1%, more specifically from 0.1 to 0.5%, even more specifically from 0.2 to 0.4%, by weight relative to the total weight of the aqueous gel ink.

The aqueous gel ink may comprise a rheology modifier capable of generating a gelling effect, in particular capable of generating a thixotropic phenomenon wherein the viscosity depends on the time of shear rate, for example chosen in the group consisting of polysaccharides such as xanthan gum, gum arabic, and mixture thereof.

Specifically, the total amount of the rheology modifier in the aqueous gel ink may range from 0.08 to 2%, more specifically from 0.2 to 0.8%, even more specifically from 0.3 to 0.6%, by weight relative to the total weight of the aqueous gel ink.

In some embodiments, the aqueous gel ink may also comprise still other additives such as:
- pH regulators like sodium hydroxide and triethanolamine,
- lubricants,
- coalescing agents,
- crosslinking agents,
- wetting agents,
- plasticizers,
- antioxidants, and
- UV stabilizers.

In some embodiments, the aqueous gel ink does not contain any other coloring agent than the metal nanoparticles. Therefore it does not contain any dyes or pigments.

In some embodiments, the aqueous gel ink contains a further coloring agent, other than the metal nanoparticles to further adjust the color impression or to render the ink a color changing ink.

For the purposes of the present disclosure, the term "color changing ink" is intended to mean any ink the color of which (first or initial color) can be changed after writing to another color (second color), which is advantageously different from the first color, by the use of the eradicator fluid such as the eradicator fluid disclosed in applicant's co-pending PCT application PCT/EP2022/054728 which is incorporated herein in its entirety by reference thereto. The color of the written mark obtained, in particular on the porous support, by this ink can thus be changed to another color any time after writing by the use of such an eradicator fluid. Specifically, the ink may be an irreversible color changing aqueous writing ink. Once the color has changed, it is not possible to change it again, and in particular it is not possible to go back to the initial color (first color).

In particular the further coloring agent can be a dye, a pigment or mixture thereof, in particular a dye.

The dye or pigment can be any dye or pigment known by the one skilled in the art and which can be used in aqueous writing inks, specifically in aqueous writing gel ink. Specifically the total amount of the further coloring agent in the aqueous writing ink (a) ranges from 0.01 to 30 weight %, more specifically from 0.05 to 25 weight % based on the total weight of the aqueous writing ink (a).

In a specific embodiment the coloring agent may be one or more dyes.

The term "dyes" should be understood as meaning colored, mineral or organic particles of any form, which are soluble in the medium in which they are solubilized, i.e. the aqueous medium of the aqueous gel ink. Advantageously, the dye is not a thermochromic dye or a photochromic dye or a pressure sensitive dye.

The dye may be chosen for example in the group consisting of direct dyes (for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56, and the like), food dyes (such as C.I. food yellow 3, and the like), Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof.

When present, the total amount of the dye(s) in the aqueous gel ink may range from 0.01 to 30% by weight, advantageously from 0.05 to 25% by weight, and more advantageously from 0.3 to 10% by weight, by weight relative to the total weight of the aqueous writing gel composition.

In some embodiments, the coloring agent may comprise one or more pigments.

The term "pigment" should be understood as meaning white or colored, mineral or organic particles of any form with the exception of metal nanoparticle, which are insoluble in the medium in which they are solubilized, i.e. the aqueous medium of the aqueous gel ink composition.

The pigment may for example be an inorganic pigment such as a carbon black, ultramarine and titanium dioxide pigment, an organic pigment such as an azo-based pigment, phthalocyanine-based pigment, indigo pigment, thioindigo pigment, thren pigment, quinacridone-based pigment, anthraquinone-based pigment, thron-based pigment, diketopyrrolopyrrole-based pigment, dioxazine-based pigment, perylene-based pigment, perinone-based pigment and isoindolinone-based pigment, a fluorescent pigment, light-storing pigment, a pearlescent pigment, synthetic mica, glass flake, alumina and transparent film with a metal oxide such as titanium oxide, and the like. The pigments are also generally contained in a dispersion, where the grinding down or particle size reduction is accompanied by appropriate dispersants to achieve stable dispersions. The pigment is specifically a pigment dispersion, more specifically chosen in the group consisting of pigment black 7 (such as Flexiverse III black 7 by SunChemical^{®}), pigment blue 15:3 (such as APE FRE BL 15:3 DISP by SunChemical^{®}), pigment red (such as Pigment red 210 by SunChemical^{®}), pigment green 7 (such as Sunsperse Eco green, Flexiverse FD Green, Flexiverse Green 7, Flexiverse HC GRN 7 by SunChemical^{®}), pigment violet 23 (such as Cellusperse^{®} A Violet 4 BP by SunChemical^{®}), pigment yellow 74 (such as FG Yellow 1SL by SunChemical^{®}) and mixtures thereof. In a specific embodiment, the pigment is chosen in the group consisting of pigment black 7 (such as Flexiverse III black 7 by SunChemical^{®}), pigment blue 15:3 (such as APE FRE BL 15:3 DISP by SunChemical^{®}), and mixtures thereof.

In some embodiments, the diameter of the pigment in the pigment dispersion is less than 1 µm, and preferably less than 0.7 µm.

When present, the total amount of the pigment dispersion in the aqueous gel ink may range from 0.1 to 30% by weight, more specifically from 0.05 to 25% by weight, still more specifically from 0.3 to 10% by weight, relative to the total weight of the aqueous gel ink.

In some embodiments, the aqueous gel ink further contains a total amount of water in the aqueous gel ink ranges from 50 to 95%, more specifically from 60 to 90%, and still more specifically from 70 to 85%, by weight relative to the total weight of the aqueous ink composition.

It should also be understood that the ink components described in the present disclosure may have multiple purposes in the ink composition. Of note, the salts of citric acid are classified herein as ionic dispersing agents, however, in some embodiments, the citrate salts may also act as reducing agent. For the purposes of calculating the (relative) amounts of such components in an aqueous gel ink composition, the compound is considered as belonging to the functional/structural category in which it is mentioned in this disclosure. In case of conflict due to a multiple mentioning in functional/structural categories, the first mentioning controls.

In some embodiments, the aqueous gel ink has a color selected from red, orange, yellow, green, cyan, blue, magenta, purple, black, gray, pink, maroon, brown, beige, tan, peach, lime, olive, turquoise, teal, navy blue, indigo, and violet; more specifically a color selected from red, green, black or blue and in particular black or blue.

The metal nanoparticles according to the disclosure can be prepared *ex-situ* during the preparation of the aqueous gel ink in the form of an aqueous suspension which will be added to the rest of the ink ingredients. Accordingly, in a second aspect, the present disclosure relates to a process for preparing aqueous gel ink comprising metal nanoparticles which essentially consist of metal and wherein said metal is selected from silver, gold, aluminum and/or copper, comprising the following steps:
(i) preparing a gel-based matrix for an aqueous gel ink;
(ii) preparing an aqueous suspension of metal nanoparticles, wherein said metal nanoparticles essentially consist of metal and said metal is selected from silver, gold, aluminum and/or copper, by mixing a metal salt, wherein the metal salt comprises silver ions, gold ions, aluminum ions and/or copper ions, with:
   - water,
   - one or more reducing agents,
   - and a dispersing agent, such as homopolymers or copolymers of vinylpyrrolidone and/or homopolymers or copolymers of vinyl alcohol, and mixtures thereof, more specifically homopolymers or copolymers of vinylpyrrolidone;
(iii) concentrating the aqueous suspension obtained in step (ii) by centrifugation and/or filtration; and
(iv) adding the concentrated aqueous suspension of nanoparticles obtained in step (iii) to the gel-based matrix obtained in step (i).

The term "gel-based matrix" is a placeholder for summarizing the remainder of components of the aqueous gel ink. It can be a single composition or be present as a plurality of physically distinct compositions.

In some embodiments, in step (iii), the aqueous suspension is concentrated by nanofiltration. The process of nanofiltration is not particularly limited and includes, in particular filtration (with or without assistance of pressure) through a membrane which retains at least a portion of the metal nanoparticles in the aqueous suspension. Without wishing to be bound by theory, it is believed that filtration in the presence of the aforementioned dispersing agent(s) is beneficial for preventing/reducing agglomeration during the concentration step. In some embodiments, the nanoparticles are retained by a porous polysulfone membrane.

In some embodiments, in step (iii), the aqueous suspension is concentrated by centrifugation. In some embodiments, centrifugation can be performed at about 8,000 to about 50,000 rpm, more specifically at about 9,000 to about 25,000 rpm and in particular at about 10,000 to about 15,000 rpm, for at least about 10 minutes, more specifically at least about 20 minutes and in particular at least about 30 minutes.

In some embodiments, the concentrated aqueous suspension of nanoparticles obtained in step (iii) has a volume which is between 1/10 and 1/3000 of the volume of aqueous suspension of nanoparticles in step (iii), more specifically between 1/50 and 1/1500, and in particular between 1/200 and 1/800.

In some embodiments, in step (iii), the aqueous suspension is concentrated by filtration, followed by centrifugation.

In some embodiments, the one or more reducing agents is selected from the list of reducing agents disclosed for the first aspect of the present disclosure.

In some embodiments, the aqueous suspension of step (ii) further comprises an ionic dispersing agent, more specifically a negatively charged ionic dispersing agent, and in particular an alkali metal or alkaline earth metal salt of citrate, such as sodium citrate.

In some embodiments, the aqueous gel ink has a fixed color. In some embodiments, the aqueous suspension of nanoparticles has a fixed color under agitation. In the sense of the present disclosure, the term "fixed color" is intended to mean that the color of the aqueous writing ink, as perceived by visual observation, is the same before and after application on an absorbing support, specifically paper, carboard or textiles, within 7 calendar days (one week).

In some embodiments, step (ii) comprises a step (ii-a) of mixing the metal salt with one or more reducing agents to prepare an aqueous suspension comprising nanoparticle seeds and a step (ii-b) of subsequently adding a further metal salt and one or more further reducing agents to the said aqueous suspension comprising nanoparticle seeds to obtain the metal nanoparticles. In some embodiments, said further metal salt is identical to the metal salt and wherein said one or more further reducing agents is the same as or different to the one or more reducing agents. In some embodiments, said one or more further reducing agents is selected from the list of reducing agents stated four paragraphs above. In some embodiments, the metal salt and said further metal salt are silver salts, in particular AgNO₃, and wherein the one or more reducing agents is NaBH₄ and said one or more further reducing agents is ascorbic acid. In some embodiments, the dispersing agent comprises homopolymers or copolymers of vinylpyrrolidone and/or homopolymers or copolymers of vinyl alcohol, and mixtures thereof, more specifically homopolymers or copolymers of vinylpyrrolidone. In some embodiments, the dispersing agent is added in step (ii-b). In some embodiments, a ionic dispersing agent, more specifically a negatively charged ionic dispersing agent, and in particular an alkali metal or alkaline earth metal salt of citrate, such as sodium citrate, is added in step (ii-a) and/or in step (ii-b), in particular in both step (ii-a) and (ii-b).

In some embodiments, the total amount of said citrate salts added in step (ii) ranges from 0.001 to 0.08 wt.-%, more specifically from 0.005 to 0.06 wt.-%, and in particular from 0.01 to 0.04 wt.-%, based on the total weight of the aqueous suspension.

In some embodiments, the total amount of metal salt added in step (ii) ranges from 0.0005 to 0.006 wt.-%, more specifically from 0.001 to 0.005 wt.-%, and in particular from 0.0012 to 0.004 wt.-%, based on the total weight of the aqueous suspension.

In some embodiments, the total amount of alkali metal hydride added in step (ii) ranges from 0.00001 to 0.005 weight %, based on the total weight of the aqueous suspension.

In some embodiments, the total amount of dispersing agent(s) added in step (ii) ranges from 0.05 to 0.5 weight % based on the total weight of the aqueous suspension.

In some embodiments, step (ii) comprises a step (ii-a) of mixing the metal salt with one or more reducing agents to prepare an aqueous suspension comprising nanoparticle seeds and a step (ii-b) of subsequently adding a further metal salt and one or more further reducing agents to the said aqueous suspension comprising nanoparticle seeds to obtain the metal nanoparticles, wherein the one or more reducing agents of step (ii-a) is a stronger reducing agent that the one or more further reducing agents of step (ii-b). In some embodiments, it may be particularly advantageous that the one or more reducing agents of step (ii-a) is NaBH₄ and/or the one or more further reducing agents of step (ii-b) is ascorbic acid. In some embodiments, NaBH₄ is added in amounts of between 0.001 to 1, more specifically 0.002 to 0.5, and in particular 0.05 to 0.3 µg/ml; and/or ascorbic acid is added in amounts of between 0.001 to 0.1, more specifically 0.002 to 0.05, and in particular 0.005 to 0.03 µg/ml; both relative to the total weight of the aqueous suspension in step (ii-a) and step (ii-b), respectively. In some embodiments, the one or more further reducing agents of step (ii-b) is a hydride, specifically not an alkali metal hydride, in particular not sodium borohydride NaBH₄.

In some embodiments, step (ii) comprises a step (ii-a) of mixing the metal salt with one or more reducing agents to prepare an aqueous suspension comprising nanoparticle seeds and a step (ii-b) of subsequently adding a further metal salt and one or more further reducing agents to the said aqueous suspension comprising nanoparticle seeds to obtain the metal nanoparticles, wherein in step (ii-a) an oxidizing agent, is added. The oxidizing agent may facilitate the formation of the nucleation seeds by reducing the reaction rate of the nanoparticle formation. In some embodiments, the oxidizing agent is selected from among C₁-C₈ alkyl peroxyacids, e.g. peracetic acid, acetyl cyclohexane sulfonyl peroxide, diisopropyl peroxydicarbonate, tert-amyl perneodecanoate, tert-butyl perneodecanoate, tert-butyl perpivalate, tert-amylperpivalate, bis(2,4-dichlorobenzoyl)peroxide, diisononanoyl peroxide, didecanoyl peroxide, dioctanoyl peroxide, dilauroyl peroxide, bis(2-methylbenzoyl)peroxide, disuccinic acid peroxide, diacetyl peroxide, dibenzoyl peroxide, tert-butyl per-2-ethylhexanoate, bis(4-chlorobenzoyl)-peroxide, tert-butyl perisobutyrate, tert-butyl permaleinate, 1,1-bis(tert-butylperoxy)3,5,5-trimethylcyclohexane,1,1-bis(tert-butylperoxy)-cyclohexane, tert-butyl peroxy isopropylcarbonate, tert-butyl perisononaoate, 2,5-dimethylhexane 2,5-dibenzoate, tert-butyl peracetate, tert-amyl perbenzoate, tert-butyl perbenzoate, 2,2-bis(tert-butylperoxy)butane, 2,2 bis(tert-butylperoxy) propane, dicumyl peroxide, 2,5-dimethylhexane-2,5-di-tert-butylperoxide, 3-tert-butylperoxy 3-phenylphthalide, di-tert-amyl peroxide, α,α'-bis(tert-butylperoxyisopropyl)benzene, 3,5-bis(t-butylperoxy)3,5-dimethyl 1,2-dioxolane, di-tert-butylperoxide, 2,5-dimethylhexyne-2,5-di-tert-butylperoxide and 3,3,6,6,9,9-hexamethyl-1,2,4,5-tetraoxacyclononane, hydrogen peroxide H₂O₂ and mixtures thereof. In some embodiments, the oxidizing agent is hydrogen peroxide H₂O_{2.}

Although oxidizing agents may be used, it was found that their use is often superfluous. Accordingly, in some embodiments, it may be advantageous for cost reasons and efficiency that the no oxidizing agent is added in the aforementioned step (ii-a).

According to the present disclosure, it should be understood that the process of preparation of the aqueous suspension containing metal nanoparticles according to the 2^{nd} aspect relate in particular to:
a) preparing an aqueous suspension of the seeds of the metal nanoparticles, in particular in step (ii-a);
b) carrying out the growth of the metal nanoparticles, in particular in step (ii-b); and
c) concentrating the metal nanoparticles in step (iii).

Above step (a) may in particular carried out by mixing a metal salt (silver, gold, aluminum and/or copper salt, specifically silver and/or gold salts, more specifically silver salts) with water and a (strong) reducing agent, such as an alkali metal hydride, specifically NaBH₄, and a dispersing agent such as an alkali metal or alkaline earth metal salt of citrate, specifically an alkali citrate salt, more specifically sodium citrate such as trisodium citrate.

In a specific embodiment, the total amount of the metal salt (silver, gold, aluminum and/or copper salt, specifically silver and/or gold salts, more specifically silver salts) added in the aqueous suspension ranges from 0.0005 to 0.05% by weight, more specifically from 0.001 to 0.01% by weight, relative to the total weight of the aqueous suspension of the seeds of the metal nanoparticles.

In a specific embodiment, the total amount of the alkali metal or alkaline earth metal salt of citrate, specifically an alkali citrate salt, more specifically sodium citrate such as trisodium citrate, in the aqueous suspension ranges from 0.0005 to 0.05% by weight, more specifically from 0.001 to 0.01 % by weight, relative to the total weight of the aqueous suspension of the seeds of the metal nanoparticles.

In a specific embodiment, the total amount of the alkali metal hydride, specifically NaBH₄, in the aqueous suspension ranges from 0.0001 to 0.01% by weight, more specifically from 0.0005 to 0.005 % by weight, relative to the total weight of the aqueous suspension of the seeds of the metal nanoparticles.

Above step (a) results an aqueous suspension of the seeds of the metal nanoparticles, also called "nuclei", more specifically with an average particle size lower than 10 nanometers.

The aqueous suspension of the seeds of the metal nanoparticles obtained in step (a) can be aged for example for 2 hours before its use in step (b).

Step (b) can be carried out by mixing the aqueous suspension of the seeds of the metal nanoparticles with:
- one or more dispersing agents, such as homopolymer or copolymer of vinylpyrrolidone and/or homopolymer or copolymer of vinyl alcohol, more specifically polyvinylpyrrolidone, and specifically this dispersing agent in combination with a ionic dispersing agent such as an alkali metal or alkaline earth metal salt of citrate, specifically an alkali citrate salt, more specifically sodium citrate such as trisodium citrate; and
- at least one (weak) reducing agent, more specifically ascorbic acid; and
- a metal salt from the same metal than the metal salt used in step a).

In some embodiments, the metal salt is a gold salt and in particular HAuCl₄, optionally in the form of the trihydrate.

In some embodiments, the metal salt is a silver salt and in particular at least one of AgNO₃, AgClO₄, Ag₂SO₄, AgCl, AgBr, AgOH, Ag₂O, AgBF₄, AgIO₃ and AgPF₆, more specifically the silver salt is AgNO₃, in particular an aqueous solution of AgNO₃. In particular the silver salts are in the form of a solution of silver nitrate in water.

In some embodiments, the metal salt is an aluminum salt and in particular at least one of AlCl₃, Al(NO₃)₃, Al₂(SO₄)₃, more specifically the aluminum salt is AlCl₃.

In one embodiment, the metal salt is a copper salt and ain particular at least one of Cu(SO₄), CuCl₂, Cu(NO₃)₂, Cu(CO₃), more specifically the copper salt is CuCl₂.

In one embodiment, the total amount of metal salt (silver, gold, aluminum and/or copper salt, specifically silver and/or gold salts, more specifically silver salts) added in the aqueous suspension ranges from 0.0005 to 0.05%, specifically from 0.001 to 0.01% by weight based on the total weight of the aqueous suspension.

In another embodiment, the total amount of the alkali metal or alkaline earth metal salt of citrate, specifically of alkali citrate salt, more specifically of sodium citrate such as trisodium citrate added in the aqueous suspension ranges from 0.001 to 0.1 weight %, specifically from 0.005 to 0.05 weight %, by weight based on the total weight of the aqueous suspension.

In a specific embodiment, the total amount of the ascorbic acid, added in the aqueous suspension ranges from 0.0001 to 0.1 weight %, specifically from 0.0005 to 0.05 weight %, based on the total weight of the aqueous suspension.

In a specific embodiment, the total amount of polyvinylpyrrolidone added in the aqueous suspension ranges from 0.01 to 2 weight %, specifically from 0.05 to 1 weight %, based on the total weight of the aqueous suspension.

The aqueous suspension of metal nanoparticles obtained has a fixed color.

In a specific embodiment, the total amount of metal nanoparticles in the aqueous suspension ranges from 0.0001 to 0.02 weight %, specifically from 0.0005 to 0.01 weight%, based on the total weight of the aqueous suspension.

Its color may vary depending on the type of metal nanoparticles (gold, silver, aluminum or copper) and its amount and the amount of reducing agent used. Its color may in particular depend on the proportion of the alkali metal or alkaline earth metal salt of citrate, specifically of alkali citrate salt, more specifically sodium citrate such as trisodium citrate and/or on the amount of metal salts. For example, the color of the aqueous ink suspension can change from yellow to red to blue with higher amount of the alkali metal or alkaline earth metal salt of citrate, specifically of alkali citrate salt, more specifically of sodium citrate such as trisodium citrate and/or with higher amount of silver salts if the metal salt is silver.

The process of the present disclosure can be performed over a wide range of temperature. In general, the process is performed within the temperature range of 0 to 100°C, specifically 5 to 70°C, and more specifically 10 to 40°C. The relatively low process temperatures contribute to process efficiency and process economy, and additionally meet the current ecological demands. Indeed, the process of the invention is performed in aqueous media, and is therefore a "green process". In addition, lower temperatures have the advantage that more stable dispersions are obtained and the silver nanoparticles exhibit lower size. Without being bound by theory, the use of dispersing agent, such as polyvinylpyrrolidone and/or polyvinyl alcohol, may further help preventing metal nanoparticles from directly contacting and/or aggregating and/or sedimenting in suspension.

In some embodiments, the total amount of metal nanoparticles in the aqueous suspension after concentration ranges from 0.01 to 10 weight %, specifically from 0.05 to 5 weight%, based on the total weight of the aqueous suspension after concentration.

It should be understood that the features disclosed with respect to the first aspect of the invention are equally applicable to the second aspect ad can be freely combined therewith.

The present disclosure will in the following be further elaborated by way of example which is not supposed to limit the disclosure in any way.

### Example

### Preparation of an aqueous suspension of silver seed nanoparticles

An aqueous suspension of silver seed nanoparticles is prepared by mixing a total amount of 3516.79g of distilled water, 0.12g of silver nitrate (9370.1 Cark Roth), 0.19g of trisodium citrate (S1804-500G Sigma Aldrich). The mixture was homogenised with a homogenizer mixer at a speed of 400 rpm during 1 minute. Then, 0.04g of sodium borohydride NaBH₄ (71321-25G Fluka Analytical) were added dropwise. The yellow solution obtained was then stored in the dark and aged for 2 hours. The materials are summarized below:

| **Material** | **Quantity** |
|---|---|
| Water (total) | 3516.79g |
| Silver nitrate (in solution) | 0.12g |
| Sodium citrate (in solution) | 0.19g |
| Sodium Borohydride (in solution) | 0.04g |
| TOTAL of seeds solution | 3517.13g |

### Preparation of an aqueous suspension of silver nanoparticles with a fixed color

An aqueous suspension of silver nanoparticles with a fixed colour is prepared by mixing to homogeneity 372815.1 g of distilled water and 879.74g of polyvinylpyrrolidone (PVP K30, Sigma Aldrich). Then, 3517.13g of the seed solution obtained in the step above, 68.18g of trisodium citrate (S1804-500G Sigma Aldrich), 30.93g of ascorbic acid (A92902-100G Sigma Aldrich) are added, in that order. The mixture was homogenised with a homogenizer mixer at a speed of 400 rpm during 1 minute. Then, 14.91g of AgNO₃ were slowly added to the mixture with a homogenizer mixer at a speed of 400 rpm. The color of the solution changes from colorless to yellow, red and finally dark-green.

The materials are summarized below:

| Material | Quantity for 377326 g of nanoparticles slurry |
|---|---|
| Water | 372815.1g |
| PVP K30 (40000 g/mol) | 879.74g |
| Seeds (step 1) | 3517.13g |
| Sodium citrate | 68.18g |
| Ascorbic acid | 30.93g |
| Silver nitrate | 14.91g |
| | |
| Total silver nanoparticles slurry | 377326g |

### Concentration step of the metal nanoparticles by nanofiltration

One minute after the last addition of AgNO₃, the aqueous suspension of silver nanoparticles was subjected to nanofiltration using the filtration system VariMem^{™} Nano, obtainable from Pall Corporation. The nanoparticles are retained by a polysulfone membrane (SLP-1053: Polysulfone - 10 kDa). The concentration is carried out continuously, the pressure is fixed at 0.7 bar for a flow rate of 12 L/min. Using nanofiltration, the nanoparticles were fast and very efficiently concentrated to about 1/500^{th} of the initial volume of the aqueous suspension without agglomeration. The concentrated aqueous suspension is black.

### Preparation of the aqueous gel ink with fixed color

In a beaker, 100g glycerin, 80g polyethylene glycol 200 and 1.9g Biocide Acticide MBS are blended and 3g xanthan gum powder is added under strong mixing until a good powder dispersion is obtained. The obtained gel matrix is mixed with the concentrated aqueous suspension. The resulting ink is stirred for 3 hours. To summarize, the ink had an overall composition as follows:

| **Component** | **Quantity** |
|---|---|
| Plasmonic coloring material (preparation described before) | 815.1g |
| Glycerin | 100g |
| Polyethylen glycol 200 | 80g |
| Acticide MBS | 1.9g |
| Xanthan Gum | 3g |
| **TOTAL** | **1000g** |

The obtained aqueous gel ink is black. The aqueous gel comprises about 0.8 % by weight of Ag nanoparticles.

The ink was filled into a Gelocity Illusion ink cartridge, sold by the company BIC S.A., France. The writing instrument had a gap between the writing ball and the writing orifice with a width of 20 µm. Writing tests were performed as well as measurement of the laydown.

### Measurement of the laydown :

The laydown of a pen as above can be determined as follows:
Measure the quantity of ink deposited at room temperature and 50% RH when realizing a 100 meter length writing line on a paper ISO12757, with a scriptometer such as Minitec, Hutt or Mikron apparatus, with a writing angle 70% and at a speed of writing of 4.5 m/min. The total weight of the writing instrument assembly (writing instrument + support + adjusting weights) between about 95 to about 100g. The test was performed according to the standard ISO 27668-1:2017.

A laydown of 300 mg/100m has been measured according to this protocol.

As seen in Fig. 2, the produced dried black writing lines are saturated and vivid in their color impression.

### Embodiments

Although the present invention is defined in the attached claims, it should be understood that the present invention can also (alternatively) be defined in accordance with the following embodiments:
1. A writing instrument comprising a writing tip and an ink reservoir connected to the writing tip, wherein the ink reservoir is sized to contain at least 100 µl of ink and contains an aqueous gel ink, comprising:
   - metal nanoparticles as coloring agent, wherein said metal nanoparticles essentially consist of metal and said metal is chosen from silver, gold, aluminum and/or copper, and
   - a dispersing agent, such as homopolymer or copolymer of vinylpyrrolidone and/or homopolymer or copolymer of vinyl alcohol, and mixtures thereof; wherein metal nanoparticles are contained within the aqueous gel ink in an amount of 0.5 - 2.5 wt.-%, relative to the total weight of the ink; and wherein the writing instrument is configured to dispense 150 - 800 mg/100m, specifically 200 - 700 mg/100m, more specifically 250 - 600 mg/100m and in particular 250-500 mg/100m.
2. The writing instrument according to embodiment 1, wherein the aqueous gel ink comprises the metal nanoparticles as the only coloring agent.
3. The writing instrument according to embodiment 1 or embodiment 2, wherein the metal of the metal nanoparticles comprises silver, gold or mixture thereof, more specifically the metal nanoparticles are silver nanoparticles.
4. The writing instrument according to any one of embodiments 1 to 3, wherein the aqueous gel ink composition exhibits a plasmonic effect.
5. The writing instrument according to any one of embodiments 1 to 4, wherein metal nanoparticles are contained within the aqueous gel ink in an amount of 0.6 - 2.0 wt.-%, more specifically from 0.65 to 1.5 wt.-%, and in particular more specifically from 0.7 to 1.4 wt.-%, relative to the total weight of the ink.
6. The writing instrument according to any one of embodiments 1 to 5, wherein the metal nanoparticles of the aqueous gel ink have an average particle size ranging from 1 to 200 nm, specifically from 2 to 100 nm, more specifically from 5 to 100 nm.
7. The writing instrument according to any one of embodiments 1 to 6, wherein the dispersing agent comprises homopolymers or copolymers of vinylpyrrolidone and/or homopolymers or copolymers of vinyl alcohol, and mixtures thereof, more specifically homopolymers or copolymers of vinylpyrrolidone.
8. The writing instrument according to any one of embodiments 1 to 7, wherein the aqueous gel ink further comprises a ionic dispersing agent, more specifically a negatively charged ionic dispersing agent, and in particular an alkali metal or alkaline earth metal salt of citrate, such as sodium citrate.
9. The writing instrument according to any one of embodiments 1 to 8, wherein the amount of dispersing agent is ranging from 0.01 to 10 weight%, more specifically ranging from 0.01 to 5 weight %, more specifically 0.05 to 1 wt.-%, and in particular 0.1 to 0.5 wt.-%, based on the total weight of the aqueous gel ink.
10. The writing instrument according to any one of embodiments 1 to 9, wherein the aqueous gel ink further comprises one or more reducing agents and/or its residuals, more specifically one or more reducing agents and/or its residuals selected from:
   ascorbic acid and its salts;
   hydrides, specifically alkali metal hydrides, in particular sodium borohydride NaBH₄;
   oxalic acid and its salts;
   formic acid and its salts;
   formaldehyde;
   hydroxylamine (NH₂OH);
   hydrazine and substituted hydrazines, in particular 1,1-dimethylhydrazine or 1,2-dimethylhydrazine;
   hydrosulfite salts, in particular sodium hydrosulfite;
   trialkylstannane, in particular tributylstannane,
   tributyltin hydride,
   phosphines, in particular triphenylphosphine,
   phosphites, in particular triphenylphosphite,
   silanes, in particular trichlorosilane, triethylsilane, tris(trimethylsilyl)silane and/or polymethylhydroxylisane,
   esters of retinol of formula (I): 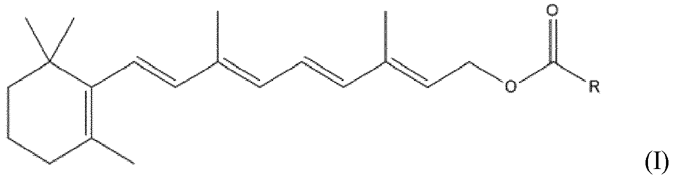
   wherein R is an optionally substituted C₁-C₆ aliphatic group, more specifically a (C₁-C₆)alkyl group;
   esters, amides and thioesters of citric acid and salts and solvates thereof; N-acyl-aminophenol, wherein said hydroxyl group is in particular in meta or in para position on the benzenic group, preferably in para position, preferably an N-acyl-aminophenol of formula HO-R₁-NH-CO-R₂ wherein R₁ is a benzene ring and R₂ is an alkyl group comprising preferably from 1 to 6 carbon atoms, preferably from 1 to 3 carbon atoms, preferably the hydroxyl group is preferably in meta or in para position, preferably in para position;
   and in particular wherein the reducing agent comprises sodium borohydride and/or ascorbic acid.
11. The writing instrument according to any one of embodiments 1 to 10, wherein the aqueous gel ink further contains one or more of: a co-solvent, an antimicrobial agent, a corrosion inhibitor, an antifoam agent, and/or a rheology modifier.
12. The writing instrument according to any one of embodiments 1 to 11, wherein the aqueous gel ink is black or blue.
13. A process for preparing an aqueous gel ink comprising metal nanoparticles which essentially consist of metal and wherein said metal is selected from silver, gold, aluminum and/or copper, comprising the following steps:
   (i) preparing a gel-based matrix for an aqueous gel ink;
   (ii) preparing an aqueous suspension of metal nanoparticles, wherein said metal nanoparticles essentially consist of metal and said metal is selected from silver, gold, aluminum and/or copper, by mixing a metal salt, wherein the metal salt comprises silver ions, gold ions, aluminum ions and/or copper ions, with:
      - water,
      - one or more reducing agents,
      - and a dispersing agent such as homopolymers or copolymers of vinylpyrrolidone and/or homopolymers or copolymers of vinyl alcohol, and mixtures thereof, more specifically homopolymers or copolymers of vinylpyrrolidone;
   (iii) concentrating the aqueous suspension obtained in step (ii) by centrifugation and/or filtration; and
   (iv) adding the concentrated aqueous suspension of nanoparticles obtained in step (iii) to the gel-based matrix obtained in step (i).
14. The process of embodiment 13, wherein in step (iii) the aqueous suspension is concentrated by nanofiltration, in particular wherein the aqueous suspension is retained by a porous polysulfone membrane.
15. The process of embodiment 13 or embodiment 14, wherein the one or more reducing agents is selected from:
   ascorbic acid and its salts;
   hydrides, specifically alkali metal hydrides, in particular sodium borohydride NaBH₄;
   oxalic acid and its salts;
   formic acid and its salts;
   formaldehyde;
   alkali metal salt or alkaline earth metal salt;
   hydroxylamine (NH₂OH);
   hydrazine and substituted hydrazines, in particular 1,1-dimethylhydrazine or 1,2-dimethylhydrazine;
   hydrosulfite salts, in particular sodium hydrosulfite;
   trialkylstannane, in particular tributylstannane,
   tributyltin hydride,
   phosphines, in particular triphenylphosphine,
   phosphites, in particular triphenylphosphite,
   silanes, in particular trichlorosilane, triethylsilane, tris(trimethylsilyl)silane and/or polymethylhydroxylisane,
   esters of retinol of formula (I): 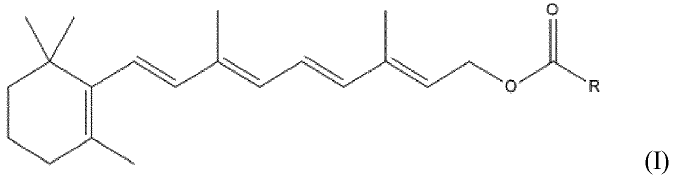
   wherein R is an optionally substituted C₁-C₆ aliphatic group, more specifically a (C₁-C₆)alkyl group;
   esters, amides and thioesters of citric acid and salts and solvates thereof; N-acyl-aminophenol, wherein said hydroxyl group is in particular in meta or in para position on the benzenic group, preferably in para position, preferably an N-acyl-aminophenol of formula HO-R₁-NH-CO-R₂ wherein R₁ is a benzene ring and R₂ is an alkyl group comprising preferably from 1 to 6 carbon atoms, preferably from 1 to 3 carbon atoms, preferably the hydroxyl group is preferably in meta or in para position, preferably in para position;
   and in particular wherein the reducing agent comprises sodium borohydride and/or ascorbic acid.
16. The process of any one of embodiments 13 to 15, wherein the aqueous suspension of step (ii) further comprises an ionic dispersing agent, more specifically a negatively charged ionic dispersing agent, and in particular an alkali metal or alkaline earth metal salt of citrate, such as sodium citrate.
17. The process of any one of embodiments 13 to 16, wherein the aqueous gel ink has a fixed color.
18. The process of any one of embodiments 13 to 17, wherein step (ii) comprises a step (ii-a) of mixing the metal salt with one or more reducing agents to prepare an aqueous suspension comprising nanoparticle seeds and a step (ii-b) of subsequently adding a further metal salt and one or more further reducing agents to the said aqueous suspension comprising nanoparticle seeds to obtain the metal nanoparticles.
19. The process of embodiment 18, wherein the further metal salt is identical to the metal salt and wherein the one or more further reducing agents is the same as or different to the one or more reducing agents.
20. The process of embodiment 18 or embodiment 19, wherein the one or more further reducing agents is selected from the list of reducing agents stated in embodiment 15.
21. The process of any one of embodiments 18 to 20, wherein the metal salt and the further metal salt are silver salts, in particular AgNO₃, and wherein the one or more reducing agents is NaBH4 and the one or more further reducing agents is ascorbic acid.
22. The process of embodiment 21, wherein NaBH4 is added in amounts of between 0.001 to 1, more specifically 0.002 to 0.5, and in particular 0.05 to 0.3 µg/ml; and/or ascorbic acid is added in amounts of between 0.001 to 0.1, more specifically 0.002 to 0.05, and in particular 0.005 to 0.03 µg/ml, both relative to the total weight of the aqueous suspension in step (ii-a) and step (ii-b), respectively.
23. The process of any one of embodiments 19 to 22, wherein the dispersing agent comprises homopolymers or copolymers of vinylpyrrolidone and/or homopolymers or copolymers of vinyl alcohol, and mixtures thereof, more specifically homopolymers or copolymers of vinylpyrrolidone, and is added in step (ii-b).
24. The process of any one of embodiments 19 to 23, wherein an ionic dispersing agent, more specifically a negatively charged ionic dispersing agent, and in particular an alkali metal or alkaline earth metal salt of citrate, such as sodium citrate, is added in step (ii-a) and/or in step (ii-b), in particular in both step (ii-a) and (ii-b).
25. The process according to embodiments 20 or 24, wherein the total amount of said citrate salts added in step (ii) ranges from 0.001 to 0.08 wt.-%, more specifically from 0.005 to 0.06 wt.-%, and in particular from 0.01 to 0.04 wt.-%, based on the total weight of the aqueous suspension.
26. The process according to any of embodiments 13 to 25, wherein the total amount of metal salt added in step (ii) ranges from 0.0005 to 0.006 wt.-%, more specifically from 0.001 to 0.005 wt.-%, and in particular from 0.0012 to 0.004 wt.-%, based on the total weight of the aqueous suspension.
27. The process according to any of embodiments 13 to 26, wherein the total amount of alkali metal hydride added in step (ii) ranges from 0.00001 to 0.005 weight %, based on the total weight of the aqueous suspension.
28. The process according to any of embodiments 13 to 27, wherein the total amount of dispersing agent(s) added in step (ii) ranges from 0.05 to 0.5 weight % based on the total weight of the aqueous suspension.
29. The process according to any of embodiments 13 to 28, wherein the metal nanoparticles obtained in step (ii) are silver nanoparticles having a non-spherical shape, more specifically an asymmetric shape, even more specifically a shape selected from platelets, rods, wires (in particular pentagonal, Y-shaped, K-shaped and multi-branched wires), bars, faceted near-spherical shapes, prisms, flower shapes, polyhedral shapes, triangular shapes, bipyramidal shapes, truncated triangular shapes, square shapes, rectangular shapes, hexagonal plates, urchins shapes or even irregular shapes; and in particular an urchin shape and/or a polyhedral shape..

## Claims

1. A writing instrument comprising a writing tip and an ink reservoir connected to the writing tip, wherein the ink reservoir is sized to contain at least 100 µl of ink and contains an aqueous gel ink, comprising:
- metal nanoparticles as coloring agent, wherein said metal nanoparticles essentially consist of metal and said metal is chosen from silver, gold, aluminum and/or copper, and
- a dispersing agent, such as homopolymer or copolymer of vinylpyrrolidone and/or homopolymer or copolymer of vinyl alcohol, and mixtures thereof; wherein metal nanoparticles are contained within the aqueous gel ink in an amount of 0.5 - 2.5 wt.-%, relative to the total weight of the ink; and wherein the writing instrument is configured to dispense 150 - 800 mg/100m, specifically 200 - 700 mg/100m, more specifically 250 - 600 mg/100m and in particular 250-500 mg/100m.

2. The writing instrument according to claim 1, wherein the aqueous gel ink comprises the metal nanoparticles as the only coloring agent.

3. The writing instrument according to claim 1 or claim 2, wherein the metal of the metal nanoparticles comprises silver, gold or mixture thereof, more specifically the metal nanoparticles are silver nanoparticles.

4. The writing instrument according to any one of claims 1 to 3, wherein metal nanoparticles are contained within the aqueous gel ink in an amount of 0.6 - 2.0 wt.-%, more specifically from 0.65 to 1.5 wt.-%, and in particular more specifically from 0.7 to 1.4 wt.-%, relative to the total weight of the ink.

5. The writing instrument according to any one of claims 1 to 4, wherein the metal nanoparticles of the aqueous gel ink have an average particle size ranging from 1 to 200 nm, specifically from 2 to 100 nm, more specifically from 5 to 100 nm.

6. The writing instrument according to any one of claims 1 to 5, wherein the dispersing agent comprises homopolymers or copolymers of vinylpyrrolidone.

7. The writing instrument according to any one of claims 1 to 6, wherein the aqueous gel ink further comprises an ionic dispersing agent, more specifically a negatively charged ionic dispersing agent, and in particular an alkali metal or alkaline earth metal salt of citrate, such as sodium citrate.

8. The writing instrument according to any one of claims 1 to 7, wherein the amount of dispersing agent is ranging from 0.01 to 10 weight%, more specifically ranging from 0.01 to 5 weight %, more specifically 0.05 to 1 wt.-%, and in particular 0.1 to 0.5 wt.-%, based on the total weight of the aqueous gel ink.

9. The writing instrument according to any one of claims 1 to 8, wherein the aqueous gel ink further comprises one or more reducing agents and/or its residuals, more specifically one or more reducing agents and/or its residuals selected from:
ascorbic acid and its salts;
hydrides, specifically alkali metal hydrides, in particular sodium borohydride NaBH₄;
oxalic acid and its salts;
formic acid and its salts;
formaldehyde;
hydroxylamine (NH₂OH);
hydrazine and substituted hydrazines, in particular 1,1-dimethylhydrazine or 1,2-dimethylhydrazine;
hydrosulfite salts, in particular sodium hydrosulfite;
trialkylstannane, in particular tributylstannane,
tributyltin hydride,
phosphines, in particular triphenylphosphine,
phosphites, in particular triphenylphosphite,
silanes, in particular trichlorosilane, triethylsilane, tris(trimethylsilyl)silane and/or polymethylhydroxylisane,
esters of retinol of formula (I): 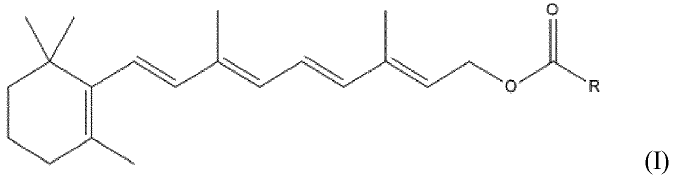
wherein R is an optionally substituted C₁-C₆ aliphatic group, more specifically a (C₁-C₆)alkyl group;
esters, amides and thioesters of citric acid and salts and solvates thereof; N-acyl-aminophenol, wherein said hydroxyl group is in particular in meta or in para position on the benzenic group, preferably in para position, preferably an N-acyl-aminophenol of formula HO-R₁-NH-CO-R₂ wherein R₁ is a benzene ring and R₂ is an alkyl group comprising preferably from 1 to 6 carbon atoms, preferably from 1 to 3 carbon atoms, preferably the hydroxyl group is preferably in meta or in para position, preferably in para position;
and in particular wherein the reducing agent comprises sodium borohydride and/or ascorbic acid.

10. A process for preparing an aqueous gel ink comprising metal nanoparticles which essentially consist of metal and wherein said metal is selected from silver, gold, aluminum and/or copper, comprising the following steps:
(i) preparing a gel-based matrix for an aqueous gel ink;
(ii) preparing an aqueous suspension of metal nanoparticles, wherein said metal nanoparticles essentially consist of metal and said metal is selected from silver, gold, aluminum and/or copper, by mixing a metal salt, wherein the metal salt comprises silver ions, gold ions, aluminum ions and/or copper ions, with:
- water,
- one or more reducing agents,
- and a dispersing agent such as homopolymers or copolymers of vinylpyrrolidone and/or homopolymers or copolymers of vinyl alcohol, and mixtures thereof, more specifically homopolymers or copolymers of vinylpyrrolidone;
(iii) concentrating the aqueous suspension obtained in step (ii) by centrifugation and/or filtration; and
(iv) adding the concentrated aqueous suspension of nanoparticles obtained in step (iii) to the gel-based matrix obtained in step (i).

11. The process of claim 10, wherein in step (iii) the aqueous suspension is concentrated by nanofiltration, in particular wherein the aqueous suspension is retained by a porous polysulfone membrane.

12. The process of claim 10 or 11, wherein step (ii) comprises a step (ii-a) of mixing the metal salt with one or more reducing agents to prepare an aqueous suspension comprising nanoparticle seeds and a step (ii-b) of subsequently adding a further metal salt and one or more further reducing agents to the said aqueous suspension comprising nanoparticle seeds to obtain the metal nanoparticles.

13. The process of claim 12, wherein the metal salt and the further metal salt are silver salts, in particular AgNO₃, and wherein the one or more reducing agents is NaBH₄ and the one or more further reducing agents is ascorbic acid.

14. The process of claim 12 or 13, wherein the dispersing agent comprises homopolymers or copolymers of vinylpyrrolidone and/or homopolymers or copolymers of vinyl alcohol, and mixtures thereof, more specifically homopolymers or copolymers of vinylpyrrolidone, and is added in step (ii-b).

15. The process of any one of claims 12 to 14, wherein a ionic dispersing agent, more specifically a negatively charged ionic dispersing agent, and in particular an alkali metal or alkaline earth metal salt of citrate, such as sodium citrate, is added in step (ii-a) and/or in step (ii-b), in particular in both step (ii-a) and (ii-b).
